# EUROPEAN PATENT APPLICATION

(11) **EP 4 653 131 A1**
(43) Date of publication of application: **26.11.2025**
(21) Application number: 25174326.6
(22) Date of filing: 05.05.2025
(51) Int. Cl.: B23Q 1/48, B23P 6/00, B23P 6/04, B23Q 9/02

(54) **MACHINING TOOL POSITIONING SYSTEM FOR HOLLOW COMPONENT**

(30) Priority: 23.05.2024 US 202418672176
(71) Applicant: GE Vernova Technology GmbH, 5400 Baden (CH)
(72) Inventor: HULTMAN, Dave Allan, Minneapolis, 55430 (US); THURMES, Andrew, Minneapolis, 55430 (US); DEMIRDJIAN, Krikor, Atlanta, 30339 (US); SWINGER, Guy Douglas, Minneapolis, 55430 (US); WALSH, Kyle Mark, Minneapolis, 55430 (US); WATSON, Tyler, Minneapolis, 55430 (US)
(74) Representative: Freigutpartners IP Law Firm

(57) **Abstract**

A machining tool positioning system includes a post configured to rotatably mount relative to a hollow component to be machined. A base member slidingly mounts relative to the post. A first actuator is configured to selectively slidingly move the base member relative to the post. A tool slide rail is coupled to the base member and extends perpendicular to the post. A machining tool slide mount slidingly couples to the tool slide rail and is configured to position a machining tool relative to the rail. A second actuator is coupled at a first end to the base member and coupled at a second end to the machining tool slide mount is configured to selectively move the machining tool slide mount along the rail. A motor may optionally turn the post to rotate the position of the base member and machining tool.

## Description

### TECHNICAL FIELD

The disclosure relates generally to machining systems. More specifically, the disclosure relates to a machining tool positioning system and a machining system for a hollow component such as a control valve casing, as set forth in the claims.

### BACKGROUND

Large industrial components sometimes experience cracking after extended use. The cracking can be repaired by machining to remove the crack and using material build up, perhaps using welding, to replace the material removed and repair the crack. Some industrial components experience cracks from extended use in difficult to access locations, such as on a surface within a hollow component. One example of a hollow component is a large main stop and control valve casing for a steam turbine, which may include an upper chamber fluidly coupled to a lower chamber. The upper and lower chambers each include a steam inlet/outlet opening and openings for parts of the control valve body. The upper and lower chambers also include a variety of surfaces that may be prone to cracking after extended use. In order to machine the surfaces in the valve casing, the control valve body is removed from the valve casing and a human machining operator enters the hollow area within one or more of the chambers with a machining tool to access the surfaces to be machined. Entering the hollow area(s) can place the operator in very uncomfortable and cramped positions.

### BRIEF DESCRIPTION

The invention as herein claimed is set forth in the appended claims.

All aspects, examples and features mentioned below can be combined in any technically possible way.

An aspect of the disclosure includes a machining system for a hollow component, comprising: a post configured to rotatably mount relative to the hollow component; a base member slidingly mounted relative to the post; a first actuator fixedly coupled at a first end to the post and coupled at a second end to the base member, the first actuator configured to selectively slidingly move the base member relative to the post; a tool slide rail coupled to the base member and extending perpendicular to the post; a machining tool slide mount slidingly coupled to the tool slide rail; a second actuator coupled at a first end to the base member and coupled at a second end to the machining tool slide mount, the second actuator configured to selectively move the machining tool slide mount along the tool slide rail; and a machining tool coupled to the machining tool slide mount.

Another aspect of the disclosure includes any of the preceding aspects, and the base member includes: a base plate having a first end and a second end; a base slide rail fixedly coupled to the post; and a slide mount slidingly coupling the base plate to the base slide rail, wherein the post includes a mount end rotatably mounted relative to the hollow component, wherein the slide mount selectively slidingly mounts the base plate to the base slide rail in one of a first position with the first end of the base plate facing the mount end of the post and a second position with the second end of the base plate facing the mount end of the post.

Another aspect of the disclosure includes any of the preceding aspects, and further comprising a motor fixed relative to the hollow component and operatively coupled to the post to selectively rotate the post, the base member, and the machining tool relative to the hollow component.

Another aspect of the disclosure includes any of the preceding aspects, and the first actuator includes a single, double action linear actuator, and the second actuator includes a retraction linear actuator and an extension linear actuator.

Another aspect of the disclosure includes any of the preceding aspects, and the machining tool slide mount includes an adjustable mount configured to selectively position the machining tool at a plurality of angular positions relative to the hollow component.

Another aspect of the disclosure includes any of the preceding aspects, and further comprising a control system for controlling the first and second actuator and the machining tool.

Another aspect of the disclosure includes any of the preceding aspects, and further comprising a motor fixed relative to the hollow component and operatively coupled to the post to selectively rotate the post, the base member, and the machining tool relative to the hollow component.

Another aspect of the disclosure includes any of the preceding aspects, and further comprising a control system for controlling the first and second actuator, the motor, and the machining tool.

Another aspect of the disclosure includes any of the preceding aspects, and the control system includes a computer numerical control (CNC) controller configured to control operation of the first and second actuator, the motor, and the machining tool, wherein the first and second actuator each includes a stepper motor.

Another aspect of the disclosure includes any of the preceding aspects, and further comprising at least one camera positioned relative to the post to capture operation of the machining tool, and a video display configured to display an image from the at least one camera.

Another aspect of the disclosure includes any of the preceding aspects, and further comprising a digital positioning system configured to sense a position of the machining tool in three-dimensional space.

Another aspect of the disclosure includes any of the preceding aspects, and further comprising a bushing configured to rotatably mount the post relative to the hollow component.

An aspect of the disclosure includes a machining tool positioning system, comprising: a post configured to rotatably mount relative to a hollow component to be machined; a base member slidingly mounted relative to the post; a first actuator fixedly coupled at a first end to the post and coupled at a second end to the base member, the first actuator configured to selectively slidingly move the base member relative to the post; a tool slide rail coupled to the base member and extending perpendicular to the post; a machining tool slide mount slidingly coupled to the tool slide rail, the machining tool slide mount configured to position a machining tool; and a second actuator coupled at a first end to the base member and coupled at a second end to the machining tool slide mount, the second actuator configured to selectively move the machining tool slide mount along the tool slide rail.

Another aspect of the disclosure includes any of the preceding aspects, and the base member includes: a base plate having a first end and a second end; a base slide rail fixedly coupled to the post; and a slide mount slidingly coupling the base plate to the base slide rail, wherein the post includes a mount end rotatably mounted relative to the hollow component, wherein the slide mount selectively slidingly mounts the base plate to the base slide rail in one of a first position with the first end of the base plate facing the mount end of the post and a second position with the second end of the base plate facing the mount end of the post.

Another aspect of the disclosure includes any of the preceding aspects, and further comprising a motor fixed relative to the hollow component and operatively coupled to the post to selectively rotate the post, the base member, and the machining tool relative to the hollow component.

Another aspect of the disclosure includes any of the preceding aspects, and the first actuator includes a single, double action linear actuator, and the second actuator includes a retraction linear actuator and an extension linear actuator.

Another aspect of the disclosure includes any of the preceding aspects, and the machining tool slide mount includes an adjustable mount configured to selectively position the machining tool at a plurality of angular positions relative to the hollow component.

Another aspect of the disclosure includes any of the preceding aspects, and further comprising a motor fixed relative to the hollow component and operatively coupled to the post to selectively rotate the post, the base member, and the machining tool relative to the hollow component.

Another aspect of the disclosure includes any of the preceding aspects, and further comprising a control system for controlling the first and second actuator and a motor, the motor fixed relative to the hollow component and operatively coupled to the post to selectively rotate the post, the base member and the machining tool relative to the hollow component.

Another aspect of the disclosure includes any of the preceding aspects, and further comprising a digital positioning system configured to sense a position of the machining tool in three-dimensional space, and wherein the control system includes a computer numerical control (CNC) controller configured to control operation of the first and second actuator and the motor, wherein the first and second actuator each includes a stepper motor.

Two or more aspects described in this disclosure, including those described in this summary section, may be combined to form implementations not specifically described herein. That is, all embodiments described herein can be combined with each other.

The details of one or more implementations are set forth in the accompanying drawings and the description below. Other features, objects and advantages will be apparent from the description and drawings, and from the claims.

### BRIEF DESCRIPTION OF THE DRAWINGS

These and other features of this disclosure will be more readily understood from the following detailed description of the various aspects of the disclosure taken in conjunction with the accompanying drawings that depict various embodiments of the disclosure, in which:
FIG. 1 shows a cross-sectional perspective view of an illustrative hollow component in which a machining tool positioning system and a machining system according to embodiments of the disclosure may be employed;
FIG. 2 shows a perspective view of a first side of a machining tool positioning system and a machining system according to embodiments of the disclosure;
FIG. 3 shows a perspective view of a second side of a machining tool positioning system and a machining system according to embodiments of the disclosure;
FIG. 4 shows a cross-sectional view of one illustrative arrangement of a slide rail and a slide mount according to embodiments of the disclosure;
FIG. 5 shows a perspective view of a machining tool positioning system and a machining system in a different position than in FIGS. 2-3, according to embodiments of the disclosure;
FIG. 6 shows an exploded perspective view of an optional adjustment mount according to embodiments of the disclosure;
FIG. 7 shows a partial cross-sectional view of a machining tool positioning system and a machining system according to embodiments of the disclosure in operation in a hollow component; and
FIG. 8 shows a perspective view of a control system for a machining tool positioning system and a machining system according to embodiments of the disclosure.

It is noted that the drawings of the disclosure are not necessarily to scale. The drawings are intended to depict only typical aspects of the disclosure and therefore should not be considered as limiting the scope of the disclosure. In the drawings, like numbering represents like elements between the drawings.

### DETAILED DESCRIPTION

As an initial matter, in order to clearly describe the subject matter of the current technology, it will become necessary to select certain terminology when referring to and describing relevant machine components within the illustrative application of a machining tool positioning system and a machining system. When doing this, if possible, common industry terminology will be used and employed in a manner consistent with its accepted meaning. Unless otherwise stated, such terminology should be given a broad interpretation consistent with the context of the present application and the scope of the appended claims. Those of ordinary skill in the art will appreciate that often a particular component may be referred to using several different or overlapping terms. What may be described herein as being a single part may include and be referenced in another context as consisting of multiple components. Alternatively, what may be described herein as including multiple components may be referred to elsewhere as a single part.

In addition, several descriptive terms may be used regularly herein, and it should prove helpful to define these terms at the onset of this section. These terms and their definitions, unless stated otherwise, are as follows. The term "axial" refers to movement or position parallel to an axis, e.g., an axis of a machine part. The term "radial" refers to movement or position perpendicular to an axis, e.g., an axis of a machine part. In cases such as this, if a first component resides closer to the axis than a second component, it will be stated herein that the first component is "radially inward" or "inboard" of the second component. If, on the other hand, the first component resides further from the axis than the second component, it may be stated herein that the first component is "radially outward" or "outboard" of the second component. Finally, the term "circumferential" refers to movement or position around an axis, e.g., a circular machine part.

In addition, several descriptive terms may be used regularly herein, as described below. The terms "first," "second," and "third," may be used interchangeably to distinguish one component from another and are not intended to signify location or importance of the individual components.

The terminology used herein is for the purpose of describing particular embodiments only and is not intended to be limiting of the disclosure. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. "Optional" or "optionally" means that the subsequently described event may or may not occur or that the subsequently described feature may or may not be present and that the description includes instances where the event occurs or the feature is present and instances where the event does not occur or the feature is not present.

Where an element or layer is referred to as being "on," "engaged to," "connected to," "coupled to," or "mounted to" another element or layer, it may be directly on, engaged, connected, coupled, or mounted to the other element or layer, or intervening elements or layers may be present. In contrast, when an element is referred to as being "directly on," "directly engaged to," "directly connected to," or "directly coupled to" another element or layer, there are no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items. The verb forms of "couple" and "mount" may be used interchangeably herein.

Embodiments of the disclosure include a machining tool positioning system. The system includes a post configured to rotatably mount relative to a hollow component to be machined. A base member slidingly mounts relative to the post, and a first actuator is fixedly coupled at a first end to the post and coupled at a second end to the base member. The first actuator is configured to selectively slidingly move the base member relative to the post. A tool slide rail is coupled to the base member and extends perpendicular to the post. A machining tool slide mount slidingly couples to the tool slide rail and is configured to position a machining tool. A second actuator is coupled at a first end to the base member and coupled at a second end to the machining tool slide mount. The second actuator is configured to selectively move the machining tool slide mount, and hence, the machining tool, along the tool slide rail. A motor may optionally turn the post to rotate the position of the base member and the machining tool. A machining system includes the machining tool positioning system and also includes the machining tool. The systems provide remotely operable machining of hollow areas of large hollow components, e.g., large enough for a human to enter at least part of the hollow component. The systems thus remove the need for a human operator to access a hollow area inside a hollow component to make repairs. The system is precise, lightweight, portable and adjustable to accommodate different forms and sizes of hollow components.

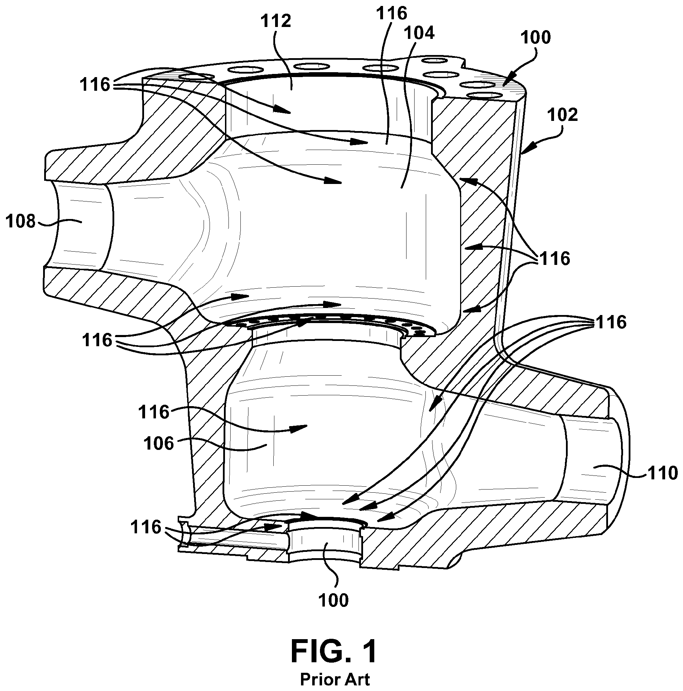

FIG. 1 shows a cross-sectional perspective view of an illustrative hollow component 100 in which a machining tool positioning system and a machining system according to embodiments of the disclosure may be employed. In the example shown, hollow component 100 is a casing 102 of a large main stop and control valve for a steam turbine (not shown). Casing 102 includes an upper chamber 104 fluidly coupled to a lower chamber 106. Upper and lower chambers 104, 106 may each include a steam inlet/outlet opening 108, 110, respectively, and openings 112, 114 for parts of a control valve body (not shown). Upper and lower chambers 104, 106 also include a variety of surfaces 116 that may be prone to cracking after extended use. As noted, in order to machine the surfaces 116 in casing 102, the control valve body (not shown) is removed from valve casing 102 and a human machining operator enters the hollow area within one or more of chambers 104, 106 with a machining tool to access surfaces 116 to be machined. The arrangement can place the human operator in very uncomfortable and cramped positions. In order to avoid this situation, embodiments of the disclosure provide a machining tool positioning system and a machining system that does not require a human operator to access the hollow areas.

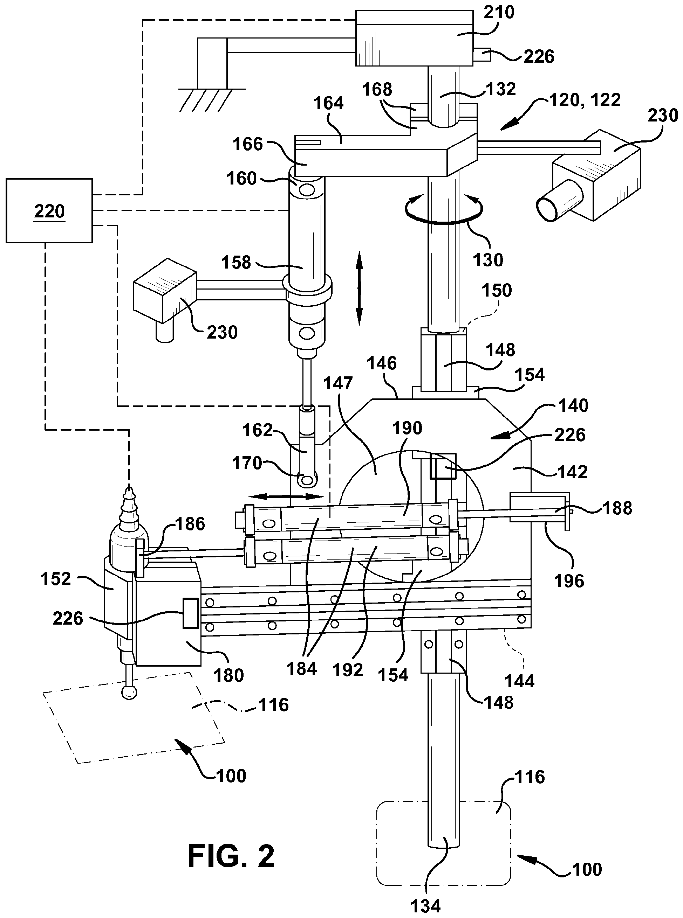

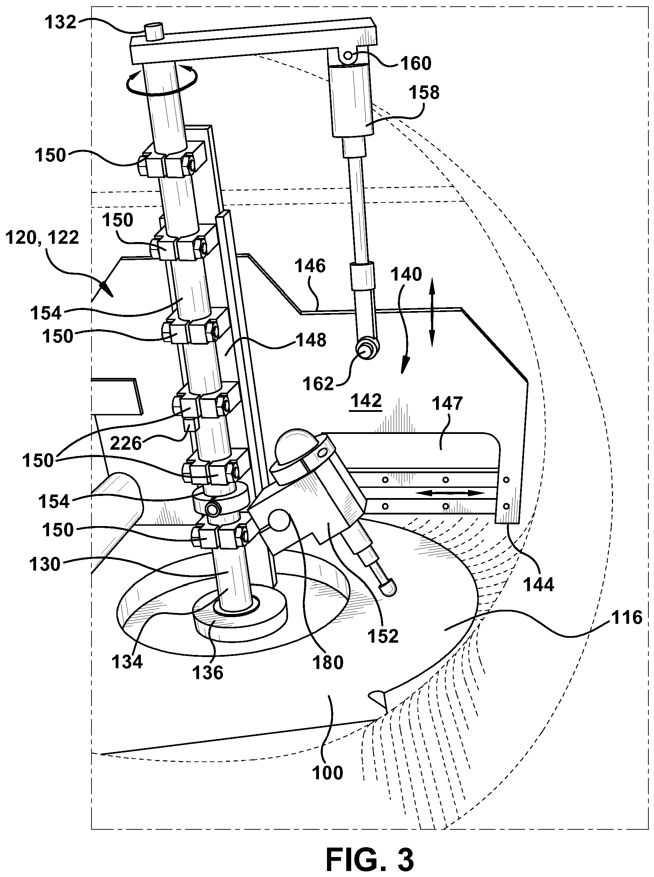

FIG. 2 shows a perspective view of a first side and FIG. 3 shows a perspective view of a second side of a machining system 120 and a machining tool positioning system 122 for hollow component 100 (FIG. 1). Machining system 120 and machining tool positioning system 122 (hereafter "system 120, 122" unless otherwise necessary) includes a post 130 configured to rotatably mount relative to hollow component 100 (FIG. 3 only). Post 130 may include any form of metal or metal alloy structural member. While post 130 is shown as a cylindrical element, it may have any cross-sectional shape (in part or in its entirety) so long as it can rotate relative to hollow component 100. Post 130 includes a first end 132 and a second, mount end 134 opposite first end 132. Mount end 134 is configured to be rotatably mounted relative to hollow component 100. Mount end 134 may be rotatably positioned relative to hollow component 100 in any now known or later developed manner. In the example shown in FIG. 3, mount end 134 is rotatably coupled to hollow component 100 by a bushing 136, which fits into an opening, such as valve body opening 114 (FIG. 1) of casing 102 (FIG. 1). However, other forms of rotatably mounting mount end 134 are possible, e.g., placement in a matching hole in hollow component 100 without a bushing or using another form of rotation-supporting element within or coupled to hollow component 100.

System 120, 122 also include a base member 140 slidingly mounted relative to post 130. Base member 140 may include any now known or later developed structural element capable of sliding position relative to post 130 and having sufficient structural strength to position other components of system 120, 122. In the example shown, base member 140 includes a base plate 142 having a first end 144 and a second end 146. First end 144 is shown as a lower end of base plate 142 and second end 146 is shown as an upper end of base plate 142 in the example configuration shown in FIGS. 2 and 3. As will be described, however, ends 144, 146 may be switched in position by reversing or flipping the position of base member 140 and base plate 142 relative to post 130. As shown in FIG. 2, any portion of base plate 142 not necessary for structural strength may be removed to reduce the weight of system 120, 122, e.g., by forming an opening(s) 147 in base plate 142.

Base member 140 may also include a first base slide rail 148 (hereafter "base slide rail 148") fixedly coupled to post 130. Base slide rail 148 may be fixedly coupled to post 130 in any now known or developed manner. In the example shown in FIG. 3, base slide rail 148 is coupled to post 130 by a plurality of clamps 150 that grasp post 130. In operation, base slide rail 148 is initially positioned relative to post 130 in a position to locate a machining tool 152 in close proximity to surface(s) 116 of hollow component 100 to be machined. Base member 140 also includes a slide mount 154 slidingly coupling base plate 142 to base slide rail 148. Slide mount 154 may include any form of structural element capable of sliding along base slide rail 148, e.g., a block of material having a slot therein capable of sliding along base slide rail 148. Slide mount 154 is coupled to base plate 142 in any now known or later developed manner, e.g., integral formation, welding, fasteners, etc.

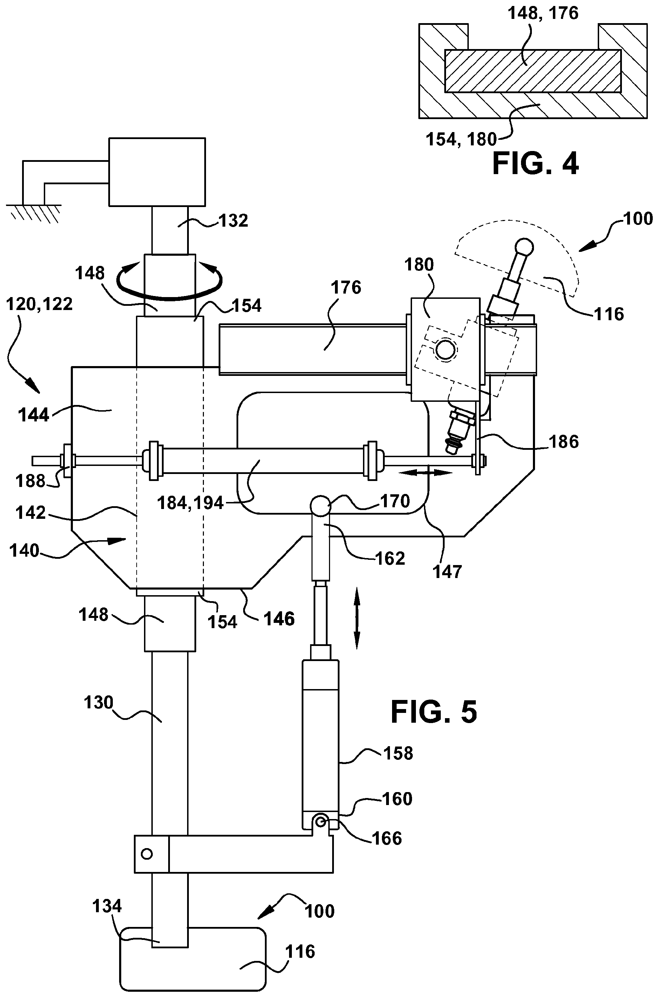

FIG. 4 shows a cross-sectional view of one possible configuration of base slide rail 148 and base slide mount 154, e.g., having mating generally rectangular shapes. It will be recognized that a wide variety of other shapes and configuration of base slide rail 148 and base slide mount 154 are possible. Base slide rail 148 and slide mount 154 may include any form of slide lubricating or promoting materials therebetween such as but not limited to plastic sheets and/or oil or other lubricants. Base slide rail 148 may have any desired length depending on, for example, the length of post 130 and the dimensions of hollow component 100 to be machined.

FIG. 5 shows a side view of system 120, 122 with base slide mount 154 slidingly mounting base plate 142 of base member 140 in a reversed position compared to FIGS. 2-3. Hence, slide mount 154 may selectively slidingly mount base plate 142 to base slide rail 148 in one of a first position (shown in FIGS. 2-3) with first end 144 of base plate 142 facing mount end 134 of post 130 and, as shown in FIG. 5, a second position with second end 146 of base plate 142 facing mount end 134 of post 130. The reversibility of the position of base member 140 on post 130 allows machining tool 152 to reach different areas of hollow component 100, including surfaces facing opposite directions relative to post 130.

System 120, 122 also includes a first actuator 158 fixedly coupled at a first end 160 to post 130 and coupled at a second end 162 to base member 140. First actuator 158 is configured to selectively slidingly move base member 140 relative to post 130. First actuator 158 may include any now known or later developed linear actuator capable of slidingly moving base member along post 130. In certain embodiments, first actuator 158 may include a hydraulic or pneumatic linear cylinder. In other embodiments, first actuator 158 may include a stepper motor. In the example shown, first actuator 158 may include a single, double action linear actuator; however, two or more single action linear actuators may be used instead, e.g., with one actuator being for retraction and another for extension. First end 160 of first actuator 158 may be coupled to post 130 using a bar member 164. Bar member 164 may have a pivot connection 166 to first actuator 158 at one end and a clamp or other mechanism 168 to fixedly couple to or grasp post 130 at an opposing end. First actuator 158 may be coupled to base plate 142 of base member 140 by another pivot connection 170.

Systems 120, 122 may also include a tool slide rail 176 coupled to base member 140 and extending perpendicular to post 130. Systems 120, 122 also include a machining tool slide mount 180 (hereafter "tool slide mount 180") slidingly coupled to tool slide rail 176. Tool slide rail 176 may have any desired length depending on, for example, the (lateral) dimensions of hollow component 100 to be machined. More particularly, tool slide rail 176 may have a length configured to position machining tool 152 in any lateral location required for the machining of the desired surface(s) 116 of hollow component 100. FIG. 4 also shows a cross-sectional view of one possible configuration of tool slide rail 176 and tool slide mount 180, e.g., having mating generally rectangular shapes. It will be recognized that a wide variety of other shapes and configuration of tool slide rail 176 and tool slide mount 180 are possible. Tool slide mount 180 may include any form of structural element capable of sliding along tool slide rail 176, e.g., a block of material having a slot therein capable of sliding along tool slide rail 176. Tool slide rail 176 and tool slide mount 180 may include any form of slide lubricating or promoting materials therebetween such as but not limited to plastic sheets and/or oil or other lubricants.

As shown in FIGS. 2 and 5, systems 120, 122 also include a second actuator 184 coupled at a first end 186 to base member 140 and coupled at a second end 188 to tool slide mount 180. Second actuator 184 is configured to selectively move tool slide mount 180 along tool slide rail 176 to laterally move machining tool 152 coupled to tool slide mount 180. Second actuator 184 may include any now known or later developed linear actuator capable of slidingly moving tool slide mount 180 and machining tool 152 along tool slide rail 176. In certain embodiments, second actuator 184 may include a (single action) retraction linear 190 actuator and a (single action) extension linear actuator 192. In certain embodiments, second actuator(s) 184 may include a hydraulic or pneumatic linear cylinders. In other embodiments, second actuator(s) 184 may include a stepper motor. In other embodiments, shown in FIG. 5, second actuator 184 may include a single, double action linear actuator 194. First end 186 and second end 188 of second actuator 184 may be coupled to tool slide mount 180 and base member 140, respectively, in any manner, e.g., pivot connection, fasteners, welding, etc. Where necessary, as shown in FIG. 2, an extension arm 196 may be coupled to base plate 142 of base member 140 to extend the connection location of second end 188 of second actuator 184. A variety of different length extension arms 196 may be provided to accommodate different sized hollow components 100.

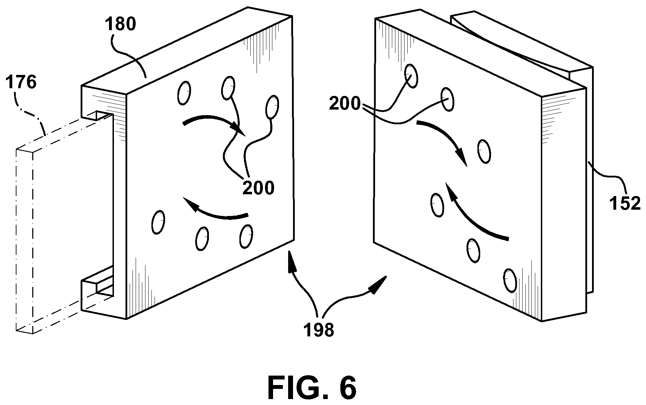

Machining system 120 may also include machining tool 152 coupled to tool slide mount 180. Machining tool 152 includes any now known or later developed tool, e.g., grinding and/or abrading, capable of removing material from surface(s) 116 of hollow component 100. In one non-limiting example, machining tool 152 may include a material removing tool available from Cleco or Dotco Tools of Westlake Village, CA, USA. In certain embodiments, machining tool 152 includes a pneumatically driven tool, but other power sources such as hydraulic or electric power are possible. Tool slide mount 180 may be coupled to machining tool 152 in any now known or later developed manner, e.g., integral formation, welding, fasteners, etc. In one non-limiting example, machining tool 152 is positioned on tool slide mount 180 at a 45° angle relative to tool slide rail 176. However, as shown in an exploded perspective view of FIG. 6, tool slide mount 180 may include an adjustable mount 198 configured to selectively position machining tool 152 at a plurality of angular positions relative to tool slide rail 176 and, hence, hollow component 100. Adjustable mount 198 may be located between machining tool 152 and tool slide mount 180 (as shown), and/or between tool slide mount 180 and tool slide rail 176. Adjustable mount 198 may include any now known or later developed manner of selectively changing the rotational angle of two structures. In the example shown, pairs of angularly arranged openings 200 in each part may be aligned and fasteners (not shown) coupled therethrough to fasten the parts in any of a number of angular positions. The angular adjustment of tool slide mount 180 allows machining tool 152 to be positioned at different angular positions relative to surface(s) 116 of hollow component 100 to accommodate the positions of different surface(s) 116 to be machined. Any desired number of angular positions can be provided.

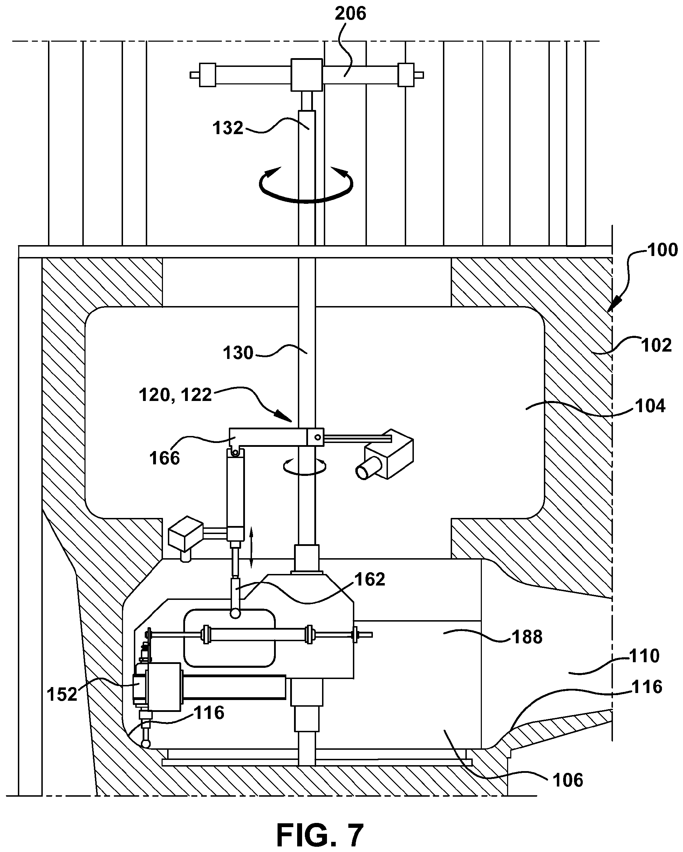

FIG. 7 shows a partial cross-sectional view of system 120, 122 in an operative position within an illustrative hollow component 100. In operation, system 120, 122 is positioned in a hollow area within hollow component 100, such as within upper chamber 104 or lower chamber 106 of control valve casing 102. Prior to the positioning, base slide rail 148 may be coupled to post 130 in a manner that has a desired range of motion of machining tool 152 in a direction along post 130 and allows machining of the desired surface(s) 116 of hollow component 100. More particularly, machining tool 152 can meet, gain and/or maintain a position to machine surface(s) 116 within a range of motion that first actuator 158 can provide to base member 140 and machining tool 152 along post 130. Base member 140 can be positioned on post 130 in either position shown in FIGS. 2-3 or FIG.5 to position machining tool 152 in the correct direction, e.g., generally upward or downward, for the desired surface(s) 116. First actuator 158 can provide movement along post 130, as needed. Second actuator 184 is operated to laterally move machining tool 152 relative to surface(s) 116 of hollow component 100. Mount end 134 is positioned in hollow component 100 in a manner that post 130 can rotate about its longitudinal axis (see circular arrows in FIGS. 2, 3, 5 and 6).

With regard to rotational movement, system 120, 122 may be manually rotated, e.g., as shown in FIG. 7, with a handle 206 coupled to end 132 of post 130. The rotation may selectively rotate post 130, base member 140 and machining tool 152 relative to hollow component 100. Alternatively, in certain embodiments, as shown in FIG. 2, system 120, 122 may include a motor 210 fixed relative to hollow component 100 and operatively coupled to (end 132) post 130 to selectively rotate post 130, base member 140 and machining tool 152 relative to hollow component 100. Motor 210 may include any now known or later developed electric, hydraulic or pneumatic motor capable of rotating post 130 at a desired speed or gear ratio. Motor 210 may be fixed relative to hollow component 100 in any manner such as but not limited to fastening to part of hollow component 100 or another fixed structure adjacent to hollow component 100. Motor 210 may be coupled to end 132 of post 130 in any manner such as but not limited to mating gear teeth, chain, belt, etc.

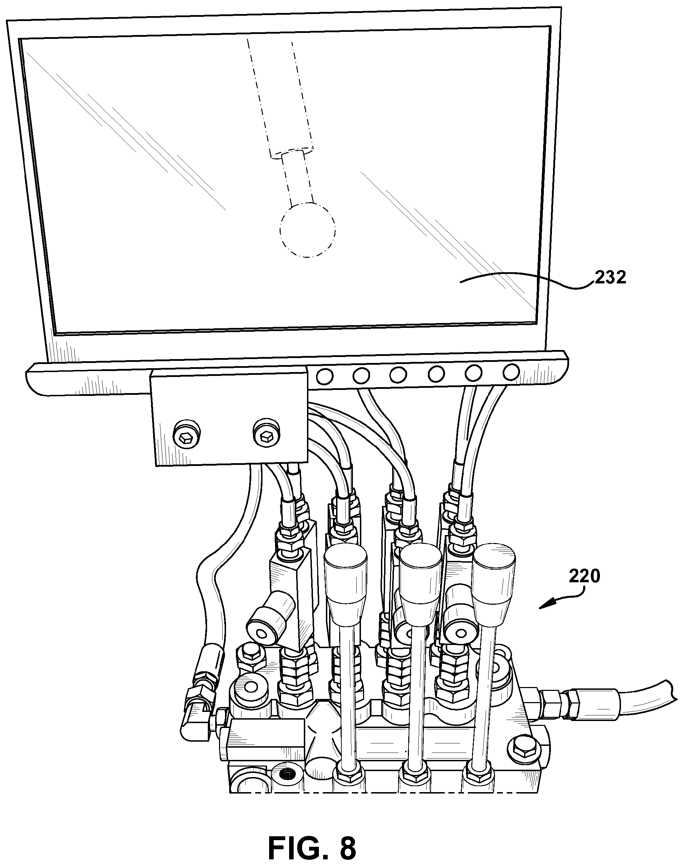

FIG. 8 shows a perspective view of a control system 220 according to embodiments of the disclosure. System 120, 122 may further include, as shown in FIGS. 2 and 8, a control system 220 for controlling at least first and second actuator 158, 184 and machining tool 152. Control system 220 may further control motor 210, where provided. Hence, control system 220 may control first and second actuator 158, 184, motor 210 and machining tool 152. In certain embodiments, as shown in FIG. 8, control system 220 can include manually operated features, such as levers, switches, etc., to control power delivery from one or more power sources, e.g., hydraulic, pneumatic, or electric sources. In other embodiments, as shown in FIG. 2, control system 220 may include any now known or later developed a computer numerical control (CNC) controller configured to control operation of first and second actuator 158, 184, motor 210 (where provided) and machining tool 152. In this latter case, first and second actuator 158, 184 may each includes a stepper motor for more precise control of positioned using those actuators. As the operation of CNC controllers is well known, no further detail is provided so the reader can focus on the salient points of the disclosure. As shown in FIG. 2, system 120, 122 may further include a digital positioning system (DPS) 226 configured to sense a position of machining tool 152 in three-dimensional space. DPS 226 may include any number of position sensors of any form to locate various parts of system 120, 122, e.g., relative to other parts and/or a predetermined origin, and ultimately determine a location of machining tool 152 relative to surface(s) 116 of hollow component 100. Those skilled in the art will recognize that a wide variety of position sensor types are applicable in this setting. For example, DPS 226 may include sensors such as but not limited: Hall effect sensors, potentiometers, magneto-resistive position sensors, optical position sensors, capacitive position sensors magnetic strip sensors. DPS 226 may interact in a known matter with control system 220 to confirm location of machining tool 152 and/or define a path of operation of machining tool 152 in three-dimensional space. As the interactive operation of position sensors and CNC controllers are well known, no further detail is provided so the reader can focus on the salient points of the disclosure.

As shown in FIGS. 2 and 5, system 120, 122 may also optionally include at least one camera 230 positioned relative to post 130 to capture images (moving and/or still) of operation of machining tool 152. System 120, 122 may also include, as shown in FIG. 8, a video display 232 configured to display an image from camera(s) 230. Feedback from camera(s) 230 can be used to control operation, e.g., manually or automatically, using control system 220.

Although not shown, system 120, 122 may include any now known or later developed harnesses and/or quick connect couplings for the various hydraulic, pneumatic and/or electrical lines necessary to operate the systems, and ease portability, operation and maintenance of system 120, 122.

System 120, 122 can be configured to allow machining of any now known or later developed large hollow component 100 in which it is desired to avoid a human operator having to access an interior thereof. More particularly, system 120, 122 can be sized to accommodate insertion into any sized hollow component 100 by controlling, among other things, a length of post 130 and/or a width of base member 140.

Embodiments of the disclosure provide various technical and commercial advantages, examples of which are discussed herein. The systems described herein provide a remotely operability of machining of hollow areas of large hollow components, e.g., large enough for a human to enter at least part of the hollow component. The systems thus remove the need for a human operator to access a hollow area inside a hollow component to make repairs. The system is precise, lightweight, portably and highly adjustable to accommodate different forms and sizes of hollow components.

Approximating language, as used herein throughout the specification and claims, may be applied to modify any quantitative representation that could permissibly vary without resulting in a change in the basic function to which it is related. Accordingly, a value modified by a term or terms, such as "about," "approximately" and "substantially," are not to be limited to the precise value specified. In at least some instances, the approximating language may correspond to the precision of an instrument for measuring the value. Here and throughout the specification and claims, range limitations may be combined and/or interchanged; such ranges are identified and include all the sub-ranges contained therein unless context or language indicates otherwise. "Approximately" or "about," as applied to a particular value of a range, applies to both end values and, unless otherwise dependent on the precision of the instrument measuring the value, may indicate +/- 10% of the stated value(s).

The corresponding structures, materials, acts, and equivalents of all means or step plus function elements in the claims below are intended to include any structure, material, or act for performing the function in combination with other claimed elements as specifically claimed. The description of the present disclosure has been presented for purposes of illustration and description but is not intended to be exhaustive or limited to the disclosure in the form disclosed. Many modifications and variations will be apparent to those of ordinary skill in the art without departing from the scope of the disclosure. The embodiments were chosen and described in order to best explain the principles of the disclosure and the practical application of the technology and to enable others of ordinary skill in the art to understand the disclosure for contemplating various modifications to the present embodiments, which may be suited to the particular use contemplated.

## Claims

1. A machining tool positioning system (122), comprising:
a post (130);
a base member (140) slidingly mounted relative to the post;
a first actuator (158) fixedly coupled at a first end (160) of the first actuator to the post (130) and coupled at a second end (162) of the first actuator to the base member (140), the first actuator configured to selectively slidingly move the base member relative to the post;
a tool slide rail (176) coupled to the base member (140) and extending perpendicular to the post (130);
a machining tool slide mount (180) slidingly coupled to the tool slide rail (176);
a second actuator (184) coupled at a first end (186) of the second actuator to the base member (140) and coupled at a second end (188) of the second actuator to the machining tool slide mount (180), the second actuator configured to selectively move the machining tool slide mount (180) along the tool slide rail (176).

2. The machining tool positioning system of claim 1, wherein the base member includes:
a base plate (142) having a first end (144) and a second end (146);
a base slide rail (148) fixedly coupled to the post (130); and
a slide mount (154) slidingly coupling the base plate (142) to the base slide rail (148),
wherein the post (130) includes a mount end (134) and wherein the slide mount (154) is configured for selectively slidingly mounting the base plate (142) to the base slide rail (148) in one of a first position with the first end (144) of the base plate facing the mount end (134) of the post and a second position with the second end (146) of the base plate facing the mount end of the post.

3. The machining system of any preceding claim, further comprising a motor (210) operatively coupled to the post, in particular to selectively rotate the post.

4. The machining tool positioning system of any preceding claim, wherein the first actuator includes (158) one single double action linear actuator (194), and the second actuator (184) includes a retraction linear actuator (190) and an extension linear actuator (192).

5. The machining tool positioning system of any preceding claim, wherein the machining tool slide mount (180) includes an adjustable mount (198) configured to selectively position a machining tool (152) coupled thereto at a plurality of angular positions, in particular relative to the post.

6. The machining tool positioning system of any preceding claim, further comprising a control system for controlling the first (158) and second (184) actuator.

7. The machining tool positioning system of the preceding claim when including the features of claim 2, wherein the control system is further configured for controlling the motor (210).

8. The machining tool positioning system of any preceding claim, wherein the first (158) and second (184) actuator each includes a stepper motor.

9. The machining tool positioning system of any preceding claim, further comprising at least one camera (230) positioned relative to the post to capture operation of a machining tool, and a video display (232) configured to display an image from the at least one camera.

10. The machining tool positioning system of any preceding claim, further comprising a digital positioning system (226) configured to sense a position of a machining tool in three-dimensional space.

11. The machining tool positioning system of any preceding claim, further comprising a bushing (136) configured to rotatably mount the post (130) relative to a hollow component (100) .

12. The machining tool positioning system of any preceding claim, wherein the post (130) is configured to rotatably mount to a hollow component (100).

13. The machining tool positioning system of any of claims 11 or 12 when including the features of claim 3, wherein the motor (210) is configured for being fixed to the hollow component (100) and operatively coupled to the post (130) to selectively rotate the post and the base member relative to the hollow component.

14. A machining system (120), comprising a machining tool positioning system (122) of any preceding claim and a machining tool (152) coupled to the machining tool slide mount (180).

15. The machining system of the preceding claim, wherein the machining tool positioning system includes the features of claim 3 and comprises a control system including a computer numerical control (CNC) controller configured to control operation of the first and second actuator, the motor, and the machining tool.
